# EUROPÄISCHE PATENTSCHRIFT

(11) **EP 0 518 038 B1**
(45) Veröffentlichungstag und Bekanntmachung des Hinweises auf die Patenterteilung: **09.11.1994**
(21) Anmeldenummer: 92107117.1
(22) Anmeldetag: 25.04.1992
(51) Int. Cl.: A01M 21/04

(54) **Vorrichtung zum Vertilgen von Unkraut, Wildwuchs und Ungeziefer**
Device to eradicate weeds, wild plants and pests
Dispositif pour tuer les mauvaises herbes, plantes sauvages et vermines

(30) Priorität: 11.06.1991 CH 1744/91
(43) Veröffentlichungstag der Anmeldung: 16.12.1992
(73) Patentinhaber: Messerli, Rudolf, CH-6997 Sessa (CH)
(72) Erfinder: Messerli, Rudolf, CH-6997 Sessa (CH)
(74) Vertreter: Blum, Rudolf Emil Ernst

(56) Entgegenhaltungen:
- CH-A- 663 319
- DE-A- 3 544 101
- GB-A- 907 061
- US-A- 2 987 118
- US-A- 4 686 957

## Beschreibung

Die vorliegende Erfindung betrifft eine Vorrichtung zum Vertilgen von Unkraut, Wildwuchs und Ungeziefer, nach dem Oberbegriff des Anspruchs 1, wie sie bereits aus US-A-4686957 bekannt ist.

Es ist bekannt, Unkraut und Wildwuchs, beispielsweise Gewächse, die zwischen den Platten eines Gehweges hervorspriessen oder solche bei Randsteinen von Strassen mittels einem Gerät zu vernichten, in welchem Infrarotstrahlen erzeugt werden. Durch die aufgrund der Infrarotstrahlen entstehende grosse Hitze werden die Pflanzenzellen zum Platzen gebracht, womit die Vertilgung des Jeweiligen Unkrauts bzw. Wildwuchs eingeleitet wird. Dabei werden auch reife Sammenzellen vernichtet, so dass ein weiteres Keimen verhindert ist. Bei mehrmaliger zeitlich auseinanderliegender Behandlung werden auch die Wurzeln der Jeweiligen Pflanzen vernichtet. Auch lässt sich mit solchen Geräten offensichtlich Ungeziefer vernichten, insbesondere solches in geschlossenen Räumen, beispielsweise Stallungen.

Zum Betrieb des Gerätes wird ein Brennstoff, üblicherweise Propan, Butan oder ein Gemisch derselben zugeführt, welches sich mit Luft vermischt. Nach erfolgter Zündung des Luft/Gasgemisches durch einen Funken entsteht in den Poren der Keramikplatte die Verbrennung des Propans, so dass Wärme in Form von Infrarotstrahlen nach unten abgestrahlt wird.

Bei bekannten solchen Geräten, insbesondere von tragbaren Geräten, hat es sich herausgestellt, dass der Brennvorgang in den Poren der Keramikplatte sehr störungsanfällig ist, wobei die Störungen durch die gestörte Strömung einerseits der zugeführten Luft und andererseits des entstehenden Abgases beruhen. Es ist erkannt worden, dass diese Störungen durch atmosphärische Luftbewegungen, d.h. Wind, hervorgerufen werden.

Hier will die Erfindung Abhilfe schaffen. Die Erfindung, wie sie in dem Anspruch 1 gekennzeichnet ist, löst diese Aufgabe.

Die durch die Erfindung erreichten Vorteile sind im wesentlichen darin zu sehen, dass die durch die jeweilige Lufteintrittsöffnung erfolgende Luftströmung von atmosphärischen Luftbewegungen unbeeinflussbar ist, und dass im Betrieb der Vorrichtung lediglich eine schlitzförmige, von der Keramikplatte entfernte Gasaustrittsöffnung vorhanden ist, so dass die Abgasströmung unmittelbar unter der porösen Keramikplatte von atmosphärischen Luftbewegungen unbeeinflussbar ist.

Im folgenden wird die Erfindung anhand von lediglich einen Ausführungsweg darstellenden Zeichnungen näher erläutert.

Die Vorrichtung weist ein Gehäuse 1 auf, in welchem eine an sich bekannte Gas/Luft-Mischkammer 2 eingesetzt ist. Vom Deckel des Gehäuses 1 steht schrägwinklig ein Verlängerungsstutzen 13 ab, der zur Verbindung mit einem Handgriffrohr dient, derart, dass die Vorrichtung, das Gerät von Hand getragen und im Betrieb bewegt werden kann. Dieser Verlängerungsstutzen 13 ist bei der gezeigten Ausführung mit einer Platte 14 verschweisst, welche ihrerseits über Schraubbolzen 15 mit dem Gehäuse 1 verbunden ist.

Im Innenraum des Gehäuses 1 ist unterhalb der Gas/Luft-Mischkammer 2 die poröse Keramikplatte 4 angeordnet. Die Bezugsziffer 16 bezeichnet eine umlaufende Dichtung, mittels welcher die Keramikplatte gegen die Innenwand des Gehäuses 1 abgedichtet ist. Unter der Keramikplatte ist weiter ein Schutznetz 10 vorhanden, welches die Keramikplatte von Beschädigungen und von einer Beschmutzung schützt.

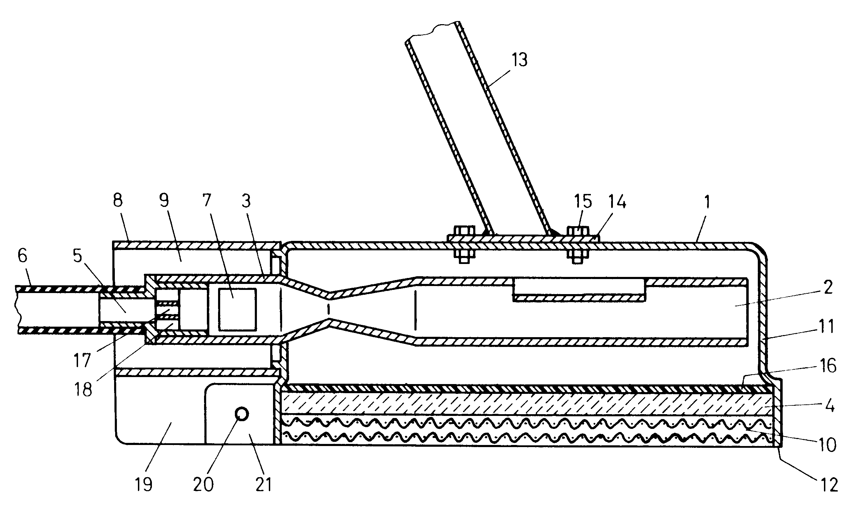

Aus der Figur ist ersichtlich, dass die Seitenwände 11 über die poröse Keramikplatte 4 und dem Schutznetz 10 heruntergezogen ausgebildet sind und bei Kanten 12 enden, so dass die Vorrichtung über diese Kanten 12 auf dem jeweiligen Grund, der bearbeitet wird, abgestützt werden kann. Durch diese Kanten 12 ist auch der Abstand der porösen Keramikplatte 4 vom jeweils zu bearbeiteten Grund festgelegt bzw. festlegbar. Diese über das Schutznetz 10 heruntergezogene Anordnung der Seitenwände 11 bildet folglich ein umlaufender Schutzrahmen, auf dessen Funktion weiter unten eingegangen werden wird.

Beim in der Zeichnung linken Endbereich der Gas/Luft-Mischkammer 2 ist der Gas- und Lufteintrittskörper 3 angeordnet.

Beim von der Mischkammer 2 entfernten Ende dieses Gas- und Lufteintrittskörpers 3 steht axial ein Rohrstutzen 5 ab. Dieser Rohrstutzen 5 dient zur Aufnahme des darüber zu schiebenden Gaszufuhrschlauches 6. Dieser Gaszufuhrschlauch 6 führt z.B. zu einer Propangasflasche, welche z.B. von der Bedienungsperson der Vorrichtung auf dem Rücken getragen ist. Das durch den Gaszufuhrschlauch 6 strömende Gas durchströmt also den Rohrstutzen 5 und durch eine Düse 17, die in einem Düsenträger 18 getragen ist, welcher im Gas- und Lufteintrittskörper 3 eingesetzt ist. Stromabwärts der Düse 17 weist der Gas- und Lufteintrittskörper 3 seitliche, seine Wand durchbrechende Lufteintrittsöffnungen 7 auf, wobei im gezeichneten Ausführungsbeispiel zwei einander diametral gegenüberliegende Lufteintrittsöffnungen vorhanden sind, von denen in der Zeichnung eine ersichtlich ist, welche mit der Bezugsziffer 7 bezeichnet ist.

Der Gas- und Lufteintrittskörper 3 ist nun in einer Windschutzhülse 8 eingesetzt, welche unten über einer Platte 19 und einer Verschraubung 20 mit einem Gegenstück 21 des Gehäuses 1 verbunden ist.

Die Windschutzhülse 8 umringt den Gas- und Lufteintrittskörper 3 und erstreckt sich in der gezeigten Ausführung bis über den Rohrstutzen 5. Die gezeichnete Länge der Windschutzhülse 8 ist nur beispielsweise, sie kann noch länger sein, d.h. bis zum Bereich des Gaszufuhrschlauches 6 verlaufen, der nicht mehr über den Rohrstutzen 5 aufgeschoben ist.

Zwischen der Innenwand der Windschutzhülse 8 und der Aussenwand des Gas- und Lufteintrittskörpers 3 ergibt sich folglich ein Luftzuströmraum 9 mit einer kreisringförmigen Querschnittsform. Die Lufteintrittsöffnung 7 weist einen beträchtlichen Abstand vom freien Ende, d.h. dem Lufteintrittsende in den Luftzuströmraum 9 auf. Dieser Luftzuströmraum 9 bewirkt nun eine Beruhigung der einströmenden Luft, d.h. durch Seitenwinde hervorgerufene Turbulenzen beim Eintritt des Luftzuströmraumes 9 klingen derart bis zur Lufteintrittsöffnung 7 ab, dass dort ein gleichförmiges Strömen der Luft in den Innenraum des Gas- und Lufteintrittskörpers 3 und somit ein einwandfreies Vermischen mit dem zugeführten Gas stattfinden kann. Anders ausgedrückt, kann der Luftströmraum 9 als Luftspeicher bezeichnet werden, so dass immer dieselbe Luftmenge durch die Lufteintrittsöffnung 7 eingesaugt wird, so dass das Gas/Luftgemisch in der Gas/Luft-Mischkammer immer dasselbe Gas/Luftverhältnis aufweist und damit keine Störungen der Verbrennung in den Poren der porösen Keramikplatte 4 auftreten können.

Erfindungsgemäss ist erkannt worden, dass auch Störungen der Verbrennung in den Poren der porösen Keramikplatte 4 durch Vorgänge bei deren Austrittsseite, also bei der Abgasströmung hervorgerufen werden können. Es ist wohl bekannt, irgendwelche ähnliche mit Hitze arbeiteten Vorrichtungen mit Schutzschildern zu versehen, wobei in diesen Schutzschildern Austrittsschlitze für das ausströmende Abgas und auch den bei der Vernichtung der Pflanzen entstehenden Dampf abzuführen. Es ist jedoch erkannt worden, dass auch hier eine möglichst ungestörte Strömung vorhanden sein muss, d.h. dass der Austritt der Abgase aus dem Gehäuse 1 in die Umgebung um eine möglichst grosse Strecke von der Unterseite der porösen Keramikplatte 4 entfernt sein muss. Aus diesem Grunde sind nun die Seitenwände 11 über die Keramikplatte 4 und auch dem Schutznetz 10 heruntergezogen ausgebildet, so dass die Kanten 12 der einen umlaufenden Schutzrahmen bildenden Seitenwände 11 die Auflage des Gehäuses 1 auf dem jeweils zu bearbeiteten Grund bilden.

Es ist erkannt worden, dass ein jeweils zu bearbeitender Grund, sei dies bei Gartenplatten, Randsteinen oder z.B. einer Stallwandung, keineswegs spiegelglatt ist, sondern eher eine gewisse Rauhigkeit aufweist. Entsprechend stützen sich die Kanten 12 im Betrieb lediglich an einigen voneinander jeweils entfernten Stellen punktförmig auf den Grund ab, so dass zwischen den jeweiligen Auflagestellen die eigentlichen Austrittsschlitze für das Abgas vorhanden sind. Diese Austrittsschlitze weisen offensichtlich den grösstmöglichen Abstand, gegeben durch die allgemeinen Dimensionen des Gehäuses 1 von der Unterseite der porösen Keramikplatte 4 auf. Weiter wird durch diese Kanten 12 offensichtlich der Abstand zwischen der Wärme abstrahlenden Keramikplatte 4 und dem jeweiligen Grund, bzw. der Abstützfläche gebildet durch die Kanten 12, bestimmt, so dass durch eine geeignete Wahl der senkrechten Dimension des durch die verlängerten Seitenwände 11 gebildeten Schutzrahmens einerseits die grösstmögliche Hitzewirkung auf den zu bearbeiteten Grund und andererseits einen grösstmöglichen Abstand zur Beruhigung der Abgasströmung unterhalb der Keramikplatte 4 durch ein geeignetes Abstimmen gesagter Ausdehnungen erreicht werden kann.

Es ist zu bemerken, dass der beim im Betrieb nachlaufenden Ende vorhandene Abschnitt der heruntergezogenen Seitenwand, also der in der Zeichnungsfigur links gelegene, klappenförmig am Gehäuse 1 angelenkt sein kann, so dass dieser Abschnitt beim Auftreffen auf z.B. einen Stein rückwärts aufklappen kann. Weiter ist es auch vorgesehen, beim vorlaufenden Ende des Gehäuses, unten bei der Kante 12 eine oder zwei Rollen anzuordnen, welche minimal über die untere Kante 12 hervorstehen.

## Patentansprüche

1. Vorrichtung zum Vertilgen von Unkraut, Wildwuchs und Ungeziefer, mit einem Gehäuse (1), in welchem eine Gas/Luft-Mischkammer (2) angeordnet ist, an welcher ein langgestreckter hohlzylinderförmiger Gas- und Lufteintrittskörper (3) anschliesst, in welchem Gehäuse (1) weiter eine poröse Keramikplatte (4) zur Erzeugung von Infrarotstrahlen durch eine in den Poren erfolgende Verbrennung angeordnet ist, welcher Gas- und Lufteintrittskörper (3) beim von der Gas/Luft-Mischkammer (2) abgekehrten Ende einen in axialer Richtung derselben verlaufenden Rohrstutzen (5) aufweist, der zur Verbindung mit einem darüber geschobenen Gaszufuhrschlauch (6) bestimmt ist, welcher Gas- und Lufteintrittskörper (3) weiter bei einer vom Rohrstutzen (5) entfernten Stelle mindestens eine in seiner Seitenwand ausgebildete Lufteintrittsöffnung (7) aufweist, wobei der Gas- und Lufteintrittskörper (3) koaxial in einer zylinderförmigen Windschutzhülse (8) angeordnet ist, die bei ihrem beim Rohrstutzen (5) angeordneten Ende offen ist und beim entgegengesetzten Ende am Gehäuse (1) anliegt, derart, dass ein vom Rohrstutzen (5) bis zur mindestens einen Lufteintrittsöffnung (7) verlaufender Luftzuströmraum (9) gebildet ist, so dass die durch die jeweilige Lufteintrittsöffnung (7) erfolgende Luftströmung von atmosphärischen Luftbewegungen unbeeinflussbar ist, dadurch gekennzeichnet, dass die poröse Keramikplatte (4) bei ihrer von der Gas/Luftmischkammer (2) abgekehrten Hauptfläche von einem Schutznetz (10) überdeckt ist, welches dazu dient, die Keramikplatte (4) von Beschädigungen und einem Verschmutzen zu schützen, und dass die Seitenwände (11) des Gehäuses (1) zur Bildung eines umlaufenden Schutzrahmens über das Schutznetz (10) hinuntergezogen verlaufen, so dass das Gehäuse (1) über die Kanten (12) des umlaufenden Schutzrahmens auf dem jeweils zu bearbeitenden Grund abstützbar ist, derart, dass im Betrieb eine durch die jeweilige Rauhigkeit des Grundes bedingte, annähernd schlitzähnliche Austrittsöffnungsanordnung zwischen dem Grund und den Kanten (12) vorhanden ist, so dass die Abgasströmung unmittelbar unter der porösen Keramikplatte (4) von atmosphärischen Luftbewegungen unbeeinflussbar ist.

## Claims

1. Apparatus for exterminating of weed, wild growth and vermin, with a casing (1), in which a gas/air-mixing chamber (2) is located which is adjoined by an elongated gas and air entry body (3) having the shape of a hollow cylinder, in which casing, furthermore, a porous ceramic plate (4) for the generation of infrared rays by a combustion proceeding in the pores is located, which gas- and air entry body (3) includes at the end facing away from the gas- and air entry body (3) a pipe stub (5) extending in axial direction of same and which is adapted for a mounting of a gas supply hose (6) pushed thereover, which gas- and air entry body (3) includes, furthermore, at a position remote from the pipe stub (5) an air entry opening (7) formed in its side wall, whereby the gas- and air entry body (3) is arranged coaxial in a cylinder shaped wind protection sleeve (8) which is open at its end located at the pipe stub (5) and abuts the casing (1) at the opposite end in such a manner that an air feed flow space (9) is formed from the pipe stub (5) to at least one air entry opening (7), such that the air flow proceeding through the respective air entry opening (7) is not being influenced by atmospheric air movements, characterized in that the porous ceramic plate (4) is covered at its main surface facing away from the gas/air-mixing chamber (2) by a protective screen (10) which acts to protect the ceramic plate (4) against damages and a soiling, and that the side walls (11) of the casing (1) extend drawn down over the protective screen (10) for producing an encirculating protective frame, such that the casing (1) may be supported on the respective ground to be treated via the edges (12) of the encirculating protective screen (10) in such a manner that in operation an approximately slit-shaped exit opening arrangement is present between the ground and the edges (12) due to respective the roughness of the ground, such that the exit gas flow directly below the porous ceramic plate (4) is not being influenced by atmospheric air movements.

## Revendications

1. Dispositif pour détruire les mauvaises herbes et la vermine, comportant un carter (1) dans lequel est disposée une chambre de mélange gaz/air (2) prolongée par un corps d'entrée de gaz et d'air (3) en forme de cylindre creux allongé, et dans lequel est également disposée une plaque de céramique poreuse (4) destinée à produire des rayons infrarouges grâce à une combustion qui a lieu dans les pores, le corps d'entrée de gaz et d'air (3) comportant, à son extrémité opposée à la chambre de mélange gaz/air (2), une tubulure (5) s'étendant dans le sens axial de celle-ci et destinée à être reliée à un tuyau d'amenée de gaz (6) glissé sur ladite tubulure, et ledit corps d'entrée de gaz et d'air (3) comportant également, en un point éloigné de la tubulure (5), au moins une ouverture d'entrée d'air (7) ménagée dans sa paroi latérale, étant précisé que le corps d'entrée de gaz et d'air (3) est disposé coaxialement dans un manchon cylindrique de protection contre le vent (8) qui est ouvert, à son extrémité disposée côté tubulure (5), et appliqué, au niveau de l'extrémité opposée, contre le carter (1) de telle sorte qu'il se forme un espace d'arrivée d'air (9) défini entre la tubulure (5) et la ou les ouvertures d'entrée d'air (7), et l'écoulement d'air par l'ouverture d'entrée d'air (7) correspondante ne peut donc pas être influencée par les mouvements d'air atmosphériques, caractérisé en ce que la plaque de céramique poreuse (4), au niveau de sa surface principale opposée à la chambre de mélange gaz/air (2), est couverte par un filet de protection (10) qui sert à protéger la plaque de céramique (4) de dégradations et d'un encrassement, et en ce que les parois latérales (11) du carter (1) descendent jusqu'au filet de protection (10) en vue de définir un cadre de protection circulaire, pour que le carter (1) puisse s'appuyer, par l'intermédiaire des bords (12) du cadre de protection circulaire, sur le sol à traiter de sorte qu'en marche, il y a un dispositif d'ouverture de sortie déterminé par la rugosité du sol et à peu près en forme de fente entre le sol et les bords (12), et l'écoulement de gaz d'échappement juste sous la plaque de céramique poreuse (4) ne peut pas être influencé par les mouvements d'air atmosphériques.
